# EUROPÄISCHE PATENTANMELDUNG

(11) **EP 1 190 645 A1**
(43) Veröffentlichungstag der Anmeldung: **27.03.2002**
(21) Anmeldenummer: 01119383.6
(22) Anmeldetag: 11.08.2001
(51) Int. Cl.: A47B 67/04, A47B 47/05

(54) **Schrankkörper**

(30) Priorität: 26.09.2000 DE 20016585 U
(71) Anmelder: ANTON SCHNEIDER GMBH & CO., 79341 Kenzingen (DE)
(72) Erfinder: Nesch, Jürgen, 77933 Lahr (DE); Weber, Heinz, 79194 Gundelfingen (DE); Bodechon, Pascal, 77955 Ettenheim (DE); Böttcher, Wolf-Dieter, 71159 Mötzingen (DE)
(74) Vertreter: KOHLER SCHMID + PARTNER

(57) **Zusammenfassung**

Um einen Schrankkörper mit einer selbsttragenden Blechunterkonstruktion 2 mit zwei lotrechten Seitenblechen 4 und mit an den Ecken der Seitenbleche 4 mit diesen verbundenen horizontalen Querverbindern 10, 12 so zu gestalten, dass nach einer Beplankung mit Dekorplatten der Schrankkörper nicht von einer Konstruktion aus Holz zu unterscheiden ist, sind die oberen Querverbinder 10 gegenüber den unteren Querverbindern 12 besonders flach ausgebildet und weisen die Seitenbleche 4 sowie die Frontseiten 13 der Schubladen 9 Öffnungen 16 auf, in welche Dekorplatten einhängbar und befestigbar sind.

## Beschreibung

Die vorliegende Erfindung betrifft einen Schrankkörper mit einer aus Blech gefertigten Unterkonstruktion als tragendes Element. Im allgemeinen können Möbel aus Holz auf zwei Arten hergestellt werden, entweder massiv oder mittels Dekorplatten, welche auf einer Unterkonstruktion befestigt werden. Im ersteren Fall besteht die Gefahr, dass das Holz der Möbel arbeitet und diese sich verziehen. Die bisherigen Konstruktionen haben den Nachteil, dass der Abstand der obersten Schublade von der oberen Deckplatte sehr viel größer ist, da für den oberen Querverbinder der Unterkonstruktion ein so großer Bauraum benötigt wird, dass die Frontblende der obersten Schublade merklich größer ausfällt als bei einer Standardeinteilung bisheriger Schrankkörper aus Holz.

Es ist daher die Aufgabe der vorliegenden Erfindung, einen Schrankkörper in der Art und Weise zu gestalten, dass nach einer Beplankung mit Dekorplatten der Schrank nicht von einer Konstruktion aus Holz zu unterscheiden ist.

Diese Aufgabe wird erfindungsgemäß auf ebenso einfache wie wirkungsvolle Weise gelöst und zwar durch einen Schrankkörper mit einer selbsttragenden Blechunterkonstruktion mit zwei lotrechten Seitenblechen und mit an den Ecken der Seitenbleche mit diesen verbundenen horizontalen Querverbindern, wobei die oberen Querverbinder gegenüber den unteren Querverbindern besonders flach ausgebildet sind und die Seitenbleche sowie die Schubladen Öffnungen aufweisen, in die Dekorplatten einhäng- und befestigbar sind.

Der erfindungsgemäße Schrank erlaubt eine Gestaltung, die sich nach der Beplankung mit den Dekorplatten nicht von einer entsprechenden Konstruktion aus Holz unterscheidet. Außerdem kann er bausteinartig individuell zusammengesetzt werden.

Die Erfindung wird im folgenden anhand der Zeichnungen näher erläutert. Es zeigen
- Fig. 1: eine erfindungsgemäße Unterkonstruktion vor dem Zusammenbau.

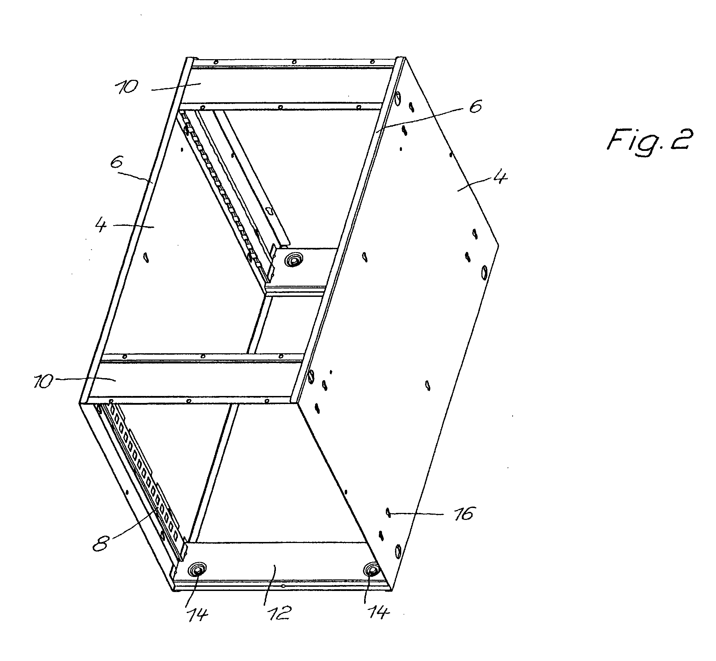

- Fig. 2: die Unterkonstruktion nach Fig. 1 in halbmontiertem Zustand

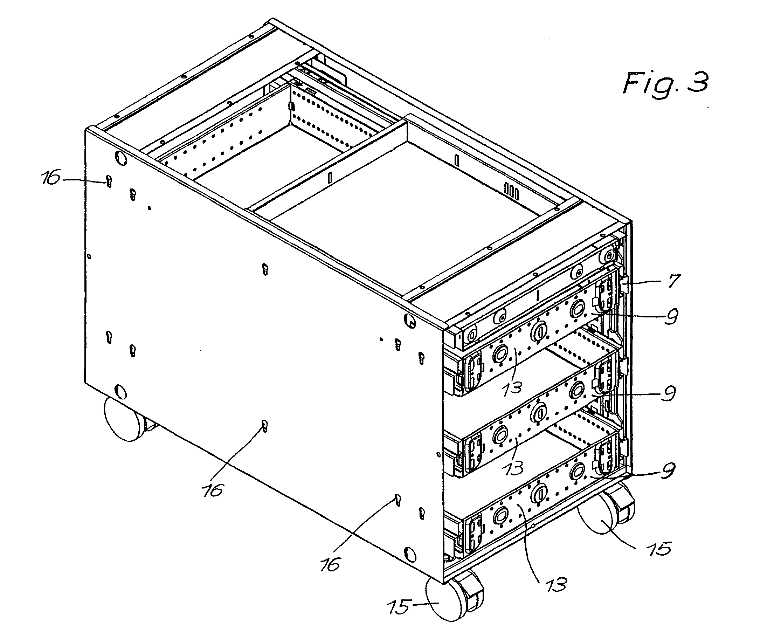

- Fig. 3: die Unterkonstruktion nach Fig. 1 nach dem Zusammenbau.

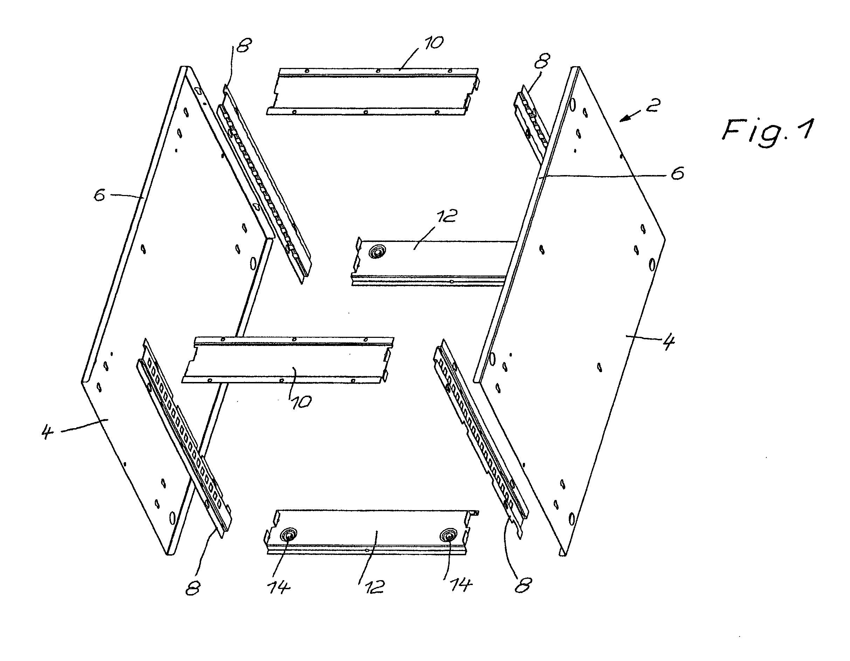

Wie der Figur 1 zu entnehmen ist, besteht die Unterkonstruktion 2 aus zwei rechts und links angeordneten Seitenblechen 4, mit seitlichen Abkantungen 6 zur Erhöhung der Steifigkeit. Diese erhalten je zwei aufgeschweisste Rasterleisten 8 im vorderen und hinteren Bereich des Schrankkörpers zur Aufnahme von Führungen 7. Die Führungen 7 dienen zur Aufnahme von Schubladen 9. Beide Seitenbleche 4 werden über vier Querverbinder 10, 12 aus Stahlblech so miteinander verbunden, dass diese auch gleichzeitig den Abstand der beiden Seitenbleche vorgeben. Durch die geringe Dicke der Blechseitenwände wird der Schrankkörper nur unwesentlich breiter als ein entsprechender Schrankkörper aus Holz.

Die Querverbinder 10, 12 werden dabei unterschiedlich ausgestaltet. Der obere 10 wird besonders flach, um die obere Schublade 11 möglichst weit oben zu positionieren. Der untere 12 wird höher ausgebildet, um eine größere Biegsteifigkeit zu erhalten, weil an diesem auch die Nietbolzen 14 für die Rollen 15 oder Gleitfüsse angebracht sind, und somit die gesamte Last des Schrankkörpers von dem unteren Querträger gehalten werden muss.

In den Seitenblechen 4 befinden sich schlüssellochähnliche Öffnungen 16, in welche die Dekorplatten mit den Schrauben eingehängt und befestigt werden. Zusätzlich können weitere Bohrungen für Fixierschrauben vorgesehen sein. Die Deckplatte wird an den oberen Querverbindern 10, 12 befestigt. Auch die Frontseiten 13 der Schubladen 9 werden in der gleichen Weise mit Deckplatten verkleidet.

Vorteilhafterweise ist die gesamte Blechunterkonstruktion 2 pulverbeschichtet.

## Patentansprüche

1. Schrankkörper mit einer selbsttragenden Blechunterkonstruktion (2) mit zwei lotrechten Seitenblechen (4) und mit an den Ecken der Seitenbleche (4) mit diesen verbundenen horizontalen Querverbindern (10, 12), wobei die oberen Querverbinder (10) gegenüber den unteren Querverbindern (12) besonders flach ausgebildet sind und die Seitenbleche (4) sowie die Frontseiten (13) der Schubladen (9) Öffnungen (16) aufweisen, in welche Dekorplatten einhängbar und befestigbar sind.

2. Schrankkörper nach Anspruch 1, **dadurch gekennzeichnet, dass** er Schubladenführungen (7), Schubladen (9) und Schließstangen (14) für die Schubladen (9) aufweist.

3. Schrankkörper nach einem oder beiden der vorhergehenden Ansprüche 1 und 2, **dadurch gekennzeichnet, dass** die Öffnungen (16) schlüssellochartig zum Einhängen von Schrauben der Dekorplatten ausgebildet sind.

4. Schrankkörper nach einem oder mehreren der vorhergehenden Ansprüche, **dadurch gekennzeichnet, dass** für die Dekorplatten zusätzliche Fixierschrauben vorgesehen sind.

5. Schrankkörper nach einem oder mehreren der vorhergehenden Ansprüche, **dadurch gekennzeichnet, dass** eine Deckplatte auf den oberen Querverbindern (10) befestigt ist.

6. Schrankkörper nach einem oder mehreren der vorhergehenden Ansprüche, **dadurch gekennzeichnet, dass** die Seitenbleche (4) seitliche Abkantungen (6) zur Erhöhung der Steifigkeit aufweisen.

7. Schrankkörper nach einem oder mehreren der vorhergehenden Ansprüche, **dadurch gekennzeichnet, dass** die Querverbinder (10, 12) den Abstand der beiden Seitenbleche (4) vorgeben.

8. Schrankkörper nach einem oder mehreren der vorhergehenden Ansprüche, **dadurch gekennzeichnet, dass** die unteren Querverbinder (12) Nietbolzen (14) für Rollen (15) und/oder Gleitfüsse tragen.

9. Schrankkörper nach einem oder mehreren der vorhergehenden Ansprüche, **dadurch gekennzeichnet, dass** die Seitenbleche (4) Rasterleisten (8) im vorderen und hinteren Bereich des Schrankkörpers zur Aufnahme von Führungen in Einhängetechnik aufweisen.

10. Schrankkörper nach einem oder mehreren der vorhergehenden Ansprüche, **dadurch gekennzeichnet, dass** die Blechunterkonstruktion (2) pulverbeschichtet ist.
